# EUROPÄISCHE PATENTANMELDUNG

(11) **EP 1 070 860 A2**
(43) Veröffentlichungstag der Anmeldung: **24.01.2001**
(21) Anmeldenummer: 00115521.7
(22) Anmeldetag: 19.07.2000
(51) Int. Cl.: F16B 19/10

(54) **Blindniet**

(30) Priorität: 22.07.1999 DE 19933891
(71) Anmelder: Gesellschaft für Befestigungstechnik Gebr. Titgemeyer GmbH & Co. KG., D-49084 Osnabrück (DE)
(72) Erfinder: Grandt, Jörg Dipl.-Ing., 49565 Bramsche (DE)
(74) Vertreter: Busse & Busse Patentanwälte

(57) **Zusammenfassung**

Die Erfindung bezieht sich auf einen Blindniet (1) mit einer Niethülse (5) und einem eine Sollbruchstelle (4) aufweisenden Nietdorn (2). Dieser Blindniet zeichnet sich dadurch aus, daß der Blindniet (1) zumindest dreiteilig ausgebildet ist und einen Schließring (8.1,8.2) aufweist, der in Schließrillen (5) des bolzenförmig geformten Nietdorns (2) einformbar ist, und daß der Nietdorn (2) einen Bolzenkopf (6) hat, über den ein Endbereich der ansonsten kopflos ausgebildeten Niethülse (3) verformbar ist, wobei sich im montierten Zustand der Teile der Schließring (8.1,8.2) an dem dem verformten Ende der Niethülse (3) gegenüberliegenden Stirnende der Niethülse (3) abstützt.

## Beschreibung

Die Erfindung bezieht sich auf einen Blindniet für hochfeste Verbindungen in einer Ausbildung nach dem Oberbegriff des Anspruchs 1.

Blindniete werden für Verbindungen eingesetzt, bei denen die zu verbindenen Elemente überwiegend nur einseitig während der Verarbeitung zugänglich sind. Konventionelle Blindniete sind mit einem Nietdorn, einer Sollbruchstelle und einer Niethülse versehen. Darüber hinaus sind Blindniete mit Zusatzfunktionen bekannt, die über die eigentliche Verbindungsaufgabe hinaus auch weitere Funktionen übernehmen können.

Solche Blindniettypen lassen sich nach verschiedenen Eigenschaften wie Festigkeit, Schließkopfausbildung, Nietabmessungen, Werkstoff etc. einordnen. Je nach Art der Ausbildung eines Blindniets, z.B. nach Art der zu wählenden Werkstoffe, können Verbindungsaufgaben beseitigt werden, z.B. für mittlere oder auch sehr hohe Festigkeitsanforderungen. Gemein ist den herkömmlichen Blindnieten, daß diese zweiteilig ausgebildet sind und eine Niethülse aufweisen, die einenends einen vorgeformten Kopf hat, wobei über den Nietdorn ein anderes Ende während der Verarbeitung zu einem Setzkopf zu verformen ist.

Solche Niethülsen verursachen einen nicht unerheblichen Fertigungsaufwand, wobei bestimmte Werkstoffe mit herkömmlichen Mitteln nicht realistisch einzusetzen sind. Dies sind beispielsweise Werkstoffe aus Aluminium oder Edelstahl.

Es ist Aufgabe der vorliegenden Erfindung, einen Blindniet der eingangs genannten Art so zu verbessern, daß er zum einen kostengünstiger gefertigt werden kann und sich darüber hinaus auch für eine Fertigung aus Werkstoffen wie Aluminium und Edelstahl eignet.

Zur Lösung dieser Aufgabe zeichnet sich der Blindniet der eingangs genannten Art durch die im kennzeichnenden Teil des Anspruchs 1 angegebenen Merkmale aus. Hinsichtlich weiterer vorteilhafter Ausgestaltungen wird auf die Ansprüche 2 bis 5 verwiesen.

Der Blindniet nach der Erfindung ist ein Verbindungselement für hochfeste Verbindungen, bei dem als Nietdorn Bolzen Einsatz finden können in Gestalt, die herkömmlichen Schließringbolzen ähneln, bei denen jeweils im Kopfbereich Änderungen vorzunehmen sind. Auch herkömmliche Schließringe, ob als Standardausführung oder mit Flansch, können genutzt werden. Die Niethülse ist ein kostengünstig zu fertigendes Bauteil, das z.B. auch aus Werkstoffen wie Aluminium und Edelstahl hergestellt sein kann. Um den erfindungsgemäßen Blindniet zu setzen, können übliche Verarbeitungswerkzeuge für die Montage von Schließringbolzen Einsatz finden. Es ist damit eine Blindnietverbindung möglich, die für eine Vielzahl von Einsatzzwecken, auch bauteiloptimiert, mit kostengünstigen Maßnahmen Einsatz finden kann.

In baulich einfacher Weise können auch für druckempfindliche Teile, die zu verbinden sind, durch gezielte Maßnahmen an der verformbaren Niethülse neue Eigenschaften und Anforderungsprofile realisiert sein. So kann z.B. an der Niethülse für die sicher durchzuführende Verformung innen oder außen im Mantelbereich durch Materialreduzierung gezielt Einfluß genommen werden. Zur Stabilisierung von Blindnietzonen für Bereiche, die nicht verformt werden sollen, können z.B. durch Einprägungen Vorteile erzielt werden.

Weitere Ausgestaltungen und Vorteile der Erfindung ergeben sich aus der nachfolgenden Beschreibung und der Zeichnung. In der Zeichnung zeigen:
- Fig. 1: ein erstes Ausführungsbeispiel eines Blindniets nach der Erfindung im Zustand vor einer Montage;
- Fig. 2: Ausführungsbeispiele von zwei Schließringen, passend zu einem Nietdorn des Blindnietes nach Fig. 1;
- Fig. 3: das in Fig. 1 gezeigte Ausführungsbeispiel im montierten Zustand;
- Fig. 4: eine zu Fig. 3 analoge Darstellung mit einer alternativen Niethülse im montierten Zustand;
- Fig. 5: die in Fig. 4 verwendete Niethülse in ihrem Zustand vor der Montage;

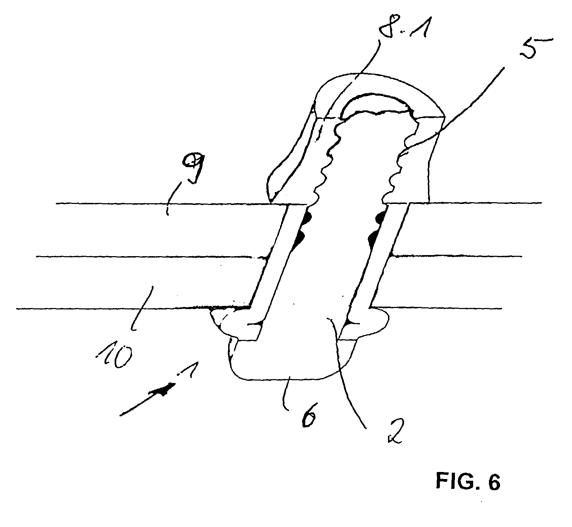

- Fig. 6: in einer perspektivischen Darstellung ein Ausführungsbeispiel des Blindnietes im montierten Zustand;
- Fig. 7: ausschnittsweise eine Niethülse mit vorgesehenen Stabilisierungs- und Reduzierungsausschnitten, und
- Fig. 8: ausschnittsweise eine Niethülse mit Einprägungen zwecks Vermeidung von Umformungsbereichen.

In der Zeichnung sind allgemein gleichwirkende Teile mit übereinstimmenden Bezugsziffern versehen. Allgemein mit 1 ist der Blindniet beziffert, der einen Nietdorn 2 eine Niethülse 3 eine Sollbruchstelle 4, Schließrillen 5 sowie einen Nietdornkopf 6 aufweist. Desweiteren ist ein Funktionsteil 7 als Zugteil vorgesehen, um den Blindniet zu montieren.

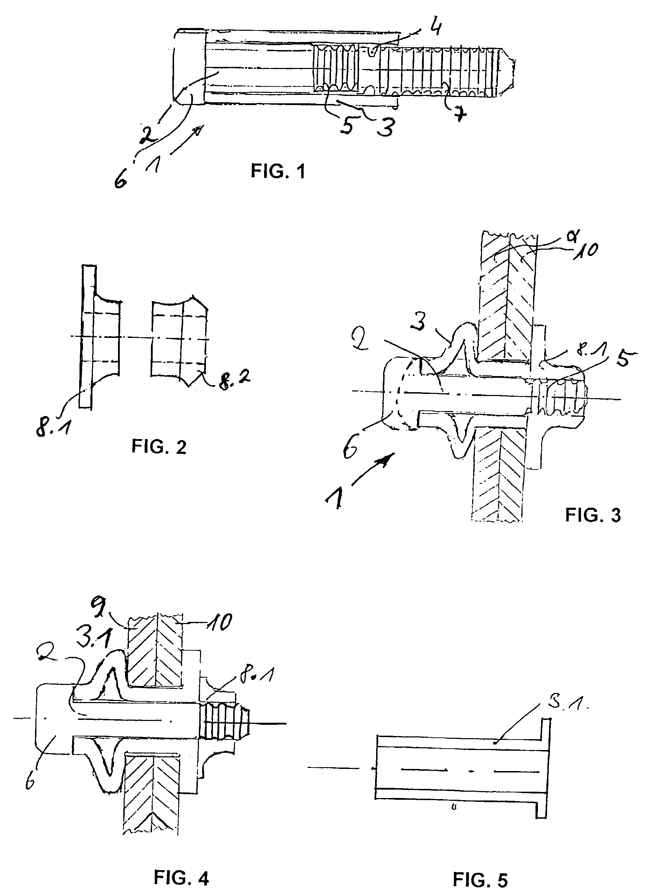

Wie im einzelnen aus Fig. 2 hervorgeht, sind z.B. handelsübliche Schließringe 8.1 bzw. 8.2 zu verwenden, um diese zur Verbindung von zwei Werkstücken 9 und 10 derart zu setzen, daß sich die Niethülse 3 setzkopfartig verformt (Fig. 3) und dann mit ihren dem Setzkopf gegenüberliegenden Kanten an dem Schließring 8.1 anliegt. Insgesamt ist daher der Blindniet dreiteilig aufgebaut. Der Nietdorn ähnelt herkömmlichen Schließringbolzen, hat jedoch gegenüber diesen eine Kopfänderung erfahren. Die Blindniethülse kann gegenüber herkömmlichen Blindniethülsen sehr kostengünstig gefertigt werden und z.B. auch aus Aluminium oder Edelstahl bestehen. Es können herkömmliche Verarbeitungswerkzeuge zum Setzen von Schließringbolzen Verwendung finden.

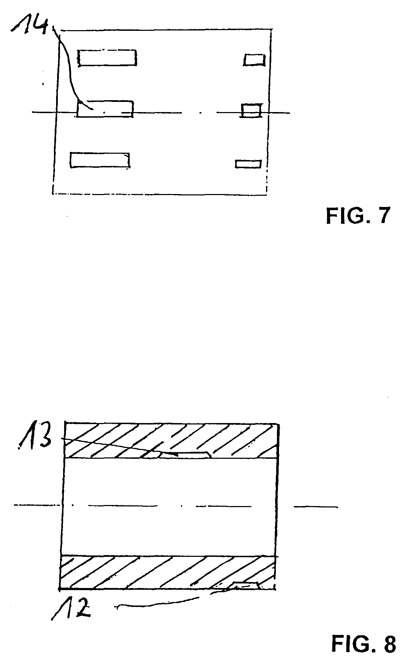

Für die Verbindung für weiche und/oder druckempfindliche Werkstücke können durch relativ einfache Maßnahmen an den Niethülse neue Eigenschaften realisiert werden. So ist z.B. in fertigungstechnisch einfacher Weise die Niethülse durch Materialreduzierung innen oder außen dahingehend zu beeinflussen, daß entweder eine Stabilisierung der Niethülse erfolgt, oder aber, daß durch Reduzierung der Niethülse eine Knickpunktunterstützung stattfindet. Dazu ist z.B. in Fig. 8 zur Stabilisierung der Blindniethülse im Außenbereich eine Einformung 12 vorgesehen. Durch Reduzierung der Blindniethülse im Innenmantel kann durch eine Ausformung 13 eine Knickpunktunterstützung hervorgerufen werden. Durch Einprägungen 14 auf der Mantelfläche können Zonen geschaffen werden, die nicht umgeformt werden sollen.

## Patentansprüche

1. Blindniet (1) mit einer Niethülse (5) und einem eine Sollbruchstelle (4) aufweisenden Nietdorn (2), dadurch gekennzeichnet, daß der Blindniet (1) zumindest dreiteilig ausgebildet ist und einen Schließring (8.1,8.2) aufweist, der in Schließrillen (5) des bolzenförmig geformten Nietdorns (2) einformbar ist, und daß der Nietdorn (2) einen Bolzenkopf (6) hat, über den ein Endbereich der ansonsten kopflos ausgebildeten Niethülse (3) verformbar ist, wobei sich im montierten Zustand der Teile der Schließring (8.1,8.2) an dem dem verformten Ende der Niethülse (3) gegenüberliegenden Stirnende der Niethülse (3) abstützt.

2. Blindniet nach Anspruch 1, dadurch gekennzeichnet, daß die Niethülse (3) aus Aluminium oder einem Edelstahl gefertigt ist.

3. Blindniet nach Anspruch 1 oder 2, dadurch gekennzeichnet, daß die Niethülse (3) in ihrer Innenfläche und/oder ihrer Außenfläche Ausnehmungen (12,13) zur Stabilisierung und/oder Reduzierung von Blindnietzonen aufweist.

4. Blindniet nach Anspruch 1 oder 2, dadurch gekennzeichnet, daß der Blindnietmantel Einprägungen (14) zwecks Vermeidung von Umformungen aufweist.

5. Blindniet nach einem der Ansprüche 1 bis 4, dadurch gekennzeichnet, daß die Blindniethülse (3.1) einenends einen umlaufenden Kragen aufweist.

6. Blindniet nach einem der Ansprüche 1 bis 4, dadurch gekennzeichnet, daß die Niethülse (3) einen abnehmenden Außen- und/oder Innendurchmesser hat.
